(19) Europäisches Patentamt
European Patent Office
Office européen des brevets

(11) EP 0 494 445 B1

# (12) EUROPÄISCHE PATENTSCHRIFT

(45) Veröffentlichungstag und Bekanntmachung des Hinweises auf die Patenterteilung:
**12.02.1997 Patentblatt 1997/07**

(51) Int. Cl.[6]: **C08G 64/42**, C08G 63/64, C08J 9/00

(21) Anmeldenummer: **91122158.8**

(22) Anmeldetag: **23.12.1991**

(54) **Verfahren zur Herstellung von Polycarbonatschaumformkörper**
Process for the preparation of polycarbonate foam moulded articles
Procédé pour la préparation d'articles moulés en mousse de polycarbonate

(84) Benannte Vertragsstaaten:
**DE FR GB IT**

(30) Priorität: **05.01.1991 DE 4100200**
**10.01.1991 DE 4100517**
**11.01.1991 DE 4100592**

(43) Veröffentlichungstag der Anmeldung:
**15.07.1992 Patentblatt 1992/29**

(73) Patentinhaber: **BAYER AG**
**51368 Leverkusen (DE)**

(72) Erfinder:
- **Köhler, Burkhard, Dr.**
  **W-4150 Krefeld 11 (DE)**
- **Horn, Klaus, Dr.**
  **W-4150 Krefeld 1 (DE)**
- **Ebert, Wolfgang, Dr.**
  **W-4150 Krefeld 1 (DE)**
- **Kırcher, Klaus, Dr.**
  **W-5090 Leverkusen 1 (DE)**
- **Piontek, Johann**
  **W-4047 Dormagen 1 (DE)**

(56) Entgegenhaltungen:
**US-A- 4 544 677** **US-A- 4 587 272**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 494 445 B1

Printed by Rank Xerox (UK) Business Services
2.13.13/3.4

## Beschreibung

Gegenstand der vorliegenden Erfindung ist ein Verfahren zur Herstellung von Polycarbonatschaumformkörpern, das dadurch gekennzeichnet ist, daß man thermoplastische Polycarbonate mit mittleren Gewichtsmittelmolekulargewichten $\overline{M}w$ von 5000 bis 50000 mit Umesterungskatalysatoren in Mengen von 0,01 Mol-% bis 1 Mol-% in Kombination mit

a) aromatischen Polycarbonsäuren in Mengen von 0,1 Mol-% bis 5 Mol-%, und oder

b) $H_2O$ in Mengen von 0,1 Mol-% bis 5 Mol-%, sowie gegebenenfalls aliphatischen Hydroxycarbonsäuren und/oder aliphatischen Alkoholen, in Mengen von 0,1 Mol-% bis 5 Mol-%,
oder in Kombination mit

c) aromatischen Polycarbonsäuren in Mengen von 0,1 Mol-% bis 5 Mol-% und Diarylcarbonaten und/oder Oligocarbonaten in Mengen von 0,1 Mol-5 bis 5 Mol-%, bezogen in allen Fällen auf Mole, aromatische Carbonatstruktureinheiten

$$[-O-R-O-\underset{\underset{O}{\|}}{C}],$$

worin -O-R-O- ein Diphenolatrest ist,
vermischt und danach die erhaltene Mischung durch Spritzguß oder Extrusion zu Schaumformkörpern verarbeitet.

Das erfindungsgemäße Verschäumungsverfahren kann noch unter Zusatz von für die Schaumherstellung weiteren Additiven wie Verstärkungsstoffen, beispielsweise Glasfasern, und/oder Nucleierungsmitteln und/oder Flammschutzmitteln, beispielsweise Nonafluorbutansulfonsäuresalze und/oder Entformungsmitteln beispielsweise Pentaerythrittetrastearat und/oder Farbstoffen und/oder Pigmenten, beispielsweise Rutil oder Ruß, und/oder Stabilisatoren gegen Hitze und UV- Strahlung durchgeführt werden.

Gegenstand der vorliegenden Erfindung ist somit auch die Erweiterung des erfindungsgemäßen Verfahrens unter Einbeziehung eines oder mehrerer der weiteren Additive.

Gegenstand der vorliegenden Erfindung ist auch die Verwendung von thermoplastischen Polycarbonaten als Treibmittel zum Verschäumen von thermoplastischen Polycarbonaten.

Das Verschäumen von Polycarbonaten ist bekannt, wobei als Treibmittel solche vorzuziehen sind, die ein inertes Gas wie Stickstoff oder Kohlendioxid abspalten (siehe beispielsweise DE-AS 1 031 507 und DE-OS 2 434 085).

Bekannt ist auch die Verwendung von Oxalsäure als Treibmittel (siehe US-PS 3 277 029).

Polycarbonate selbst zum Verschäumen von Polycarbonaten zu verwenden ist überraschenderweise möglich, wenn man durch kontrollierten, partiellen Abbau des Polycarbonats $CO_2$ freisetzt und dieses zum Verschäumen des restlichen Polycarbonats nutzt.

Der kontrollierte Abbau des Polycarbonats erfolgt durch den Zusatz von Umesterungskatalysatoren in Kombination mit aromatischen Polycarbonsäuren und/oder mit $H_2O$, wobei bei Einsatz von $H_2O$ ohne aromatische Polycarbonsäuren aliphatische Hydroxycarbonsäuren und/oder aliphatische Alkohole mit dem Zusatz des $H_2O$ kombiniert werden können.

Bekannt ist der Abbau von Polycarbonaten unter Freisetzung von $CO_2$ unter dem Einfluß von Säuren (siehe DE-AS 1 260 479), auch in Kombination mit Katalysatoren (siehe EP- 0 127 842 und US-PS 4 338 422).

Bekannt ist aber auch, Polycarbonate durch den Zusatz von Säuren zu stabilisieren, und zwar gegen die Einwirkung von Feuchtigkeit (siehe US-PS 3 951 903) sowie gegen Bestrahlung (EP-0 353 776).

Der Zusatz von Fettsäuren als Entformungsmittel für Polycarbonate ist ebenfalls bekannt (siehe US-PS 4 409 351 und US-PS 4 408 000). Hierbei tritt jedoch ebenfalls Abbau des Polycarbonats auf (siehe DE-OS 3 704 666, Vergleichsbeispiel 2 und Jp-Sho 47-41092).

EP-A-0 158 212 beschreibt die Verwendung von Mono- und Diestern der Zitronensäure zur Herstellung von Kunststoffschaum; als Kunststoffe sind auch Polycarbonate erwähnt.

Bekannt ist auch, daß Polycarbonate nur im trockenen Zustand einwandfrei verarbeitbar sind (siehe Bayer-Kunststoffe, 2, Auflage, 1959, Seite 177), und daß Feuchtigkeigt zu Molekulargewichtsabbau (Plastics Technology, 10, 1964, Seiten 32-36) oder zur Blasenbildung führt (GB-PS 841 652).

Bekannt ist aber auch, daß der Zusatz von $H_2O$ zu Polycarbonat mit anschließender Vakuumextrusion zu klarem Polycarbonatmaterial führt (siehe US-PS 3 567 813 und EP-0 300 485).

Aus der DE-OS 33 25 702 sind Mischungen von Polycarbonaten, einem bestimmten Pfropfpolymerisat und einem polymeren, ansäuerndem Mittel bekannt. Die aus den Mischungen erhältlichen Formmassen haben eine verbesserte Stabilität und Schlagzähigkeit.

Das erfindungsgemäße Verfahren ist aus den vorstehend genannten Literaturstellen weder bekannt noch nahegelegt.

Thermoplastische aromatische Polycarbonate im Sinne der vorliegenden Erfindung sind Polycarbonate, die nach den üblichen, in der Literatur bekannten Methoden aus Diphenolen und Carbonatspendern hergestellt worden sind (siehe beispielsweise H. Schnell, Chemistry and Physics of Polycarbonates, Interscience Publishers, New York, 1964", US-Patent 3 028 365 und DE-OS 3 832 396.

Diphenole für solche Polycarbonate können beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen sein.

Bevorzugte Diphenole sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Die Diphenole können sowohl allein als auch im Gemisch miteinander verwendet werden, es sich also sowohl Homopolycarbonate als auch Copolycarbonate einbezogen. Die Diphenole sind literaturbekannt oder nach literaturbekannten Verfahren herstellbar.

Es können auch geringe Mengen, vorzugsweise Mengen zwischen 0,05 und 2,0 Mol-%, bezogen auf die Mole eingesetzter Diphenole, an tri- oder mehr als trifunktionellen Verbindungen, insbesondere solchen mit drei oder mehr als drei phenolischen Hydroxylgruppen, mitverwendet werden. Einige der verwendbaren Verbindungen mit drei oder mehr als drei phenolischen Hydroxylgruppen sind beispielsweise

Phloroglucin,

4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis(2-hydroxy-5'-methyl-benzyl)-4-methylphenol,
2-(4-Hydroxyphenyl)-2-(3,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan und
1,4-Bis-(4',4''-dihydroxytriphenyl)-methyl-benzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern können entweder mit den Diphenolen selbst und den Molekulargewichtsreglern in der wäßrigen alkalischen Phase vorgelegt werden, oder in einem organischen Lösungsmittel gelöst vor der Phosgenierung, zugegeben werden.

Geeignete Molekulargewichtsregler sind die bekannten, vorzugsweise Monophenole.

Die aromatischen Polycarbonate gemäß vorliegender Erfindung sollen Gewichtsmittelmolekulargewichte $\overline{M}w$ (ermittelt durch Gelpermeationschromatographie) zwischen 5000 und 50000, vorzugsweise zwischen 15000 und 35000 haben.

Die Lösungsviskositäten liegen entsprechend zwischen 1,15 und 1,35, gemessen in Dichlormethan (0,5 g/100 ml) Thermoplastische, aromatische Polycarbonate im Sinne der vorliegenden Erfindung schließen thermoplastische aromatische Polyestercarbonate mit ein, also solche "Polycarbonate", in denen ein Teil, maximal 50 Mol-% an Carbonatstruktureinheiten durch aromatische Dicarboxylatstruktureinheiten in bekannter Weise ersetzt sind.

Geeignete aromatische Dicarbonsäuren sind beispielsweise Orthophthalsäure, Terephthalsäure, Isophthalsäure,

tert.-Butylisophthalsäure, 3,3'-Diphenyldicarbonsäure, 4,4'-Diphenyldicarbonsäure, 4,4'-Diphenyletherdicarbonsäure, 4,4'-Benzophenondicarbonsäure, 3,4'-Benzophenondicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Geeignete Diphenole sind die vorstehend für die Polycarbonatherstellung genannten.

Entsprechendes gilt für die Verzweiger und für die monophenolischen Kettenabbrecher, wobei hier aber auch aromatische Monocarbonsäuren beispielsweise in Form ihrer Säurechloride oder Ester verwendet werden können.

Die Kohlensäure kann entweder via $COCl_2$ oder via Diphenylcarbonat in die Polyestercarbonate eingebaut werden, je nach Wahl des Herstellungsverfahrens, also je nachdem, ob Phasengrenzflächenpolykondensation oder Schmelzumesterung zur Polyestercarbonatherstellung verwendet wird.

Entsprechendes gilt für die aromatischen Dicarbonsäuren; sie werden entweder als aromatische Dicarbonsäuredichloride im Zweiphasengrenzflächenverfahren oder als Dicarbonsäurediester im Schmelzumesterungsverfahren eingesetzt. Entsprechendes gilt, falls als Kettenabbrecher Monocarbonsäuren eingesetzt werden.

Die Herstellung der erfindungsgemäß zu verwendenden Polyestercarbonate erfolgt nach bekannten Herstellungsverfahren, also wie bereits erwähnt beispielsweise nach dem Phasengrenzflächenverfahren oder nach dem Schmelzumesterungsverfahren.

Die zu verwendenden Polyestercarbonate können somit sowohl linear als auch in bekannter Weise verzweigt sein.

Die aromatischen Polyestercarbonate haben mittlere Gewichtsmittelmolekulargewichte $\overline{M}w$ (ermittelt durch Gelpermeationschromatographie) zwischen 5000 und 50000, vorzugsweise zwischen 15000 und 35000.

Die molare Menge an Carbonat-Einheiten zu aromatischen Dicarboxylateinheiten in den erfindungsgemäße zu verwendenden Polyestercarbonaten liegt mindestens bei 50:50, vorzugsweise bei 75:25 und insbesondere bei 90:10. Mit anderen Worten, bei den erfindungsgemß zu verwendenden Polyestercarbonaten liegt das Übergewicht bei den Carbonatstruktureinheiten, als der $CO_2$-Resource.

Erfindungsgemäß geeignete Umesterungskatalysatoren sind alle für die Umesterung von Kohlensäureestern bzw. Carbonsäureestern bekannten Verbindungen, wie Metalloxide, Metallhydroxide, Metallalkoxide, Carbonsäureverbindungen von Metallen oder Organometallverbindungen, aber auch 5-gliedrige Stickstoff-haltige Heterocyclen, Amidine, tertiäre Amine und deren Salze und Tetraalkylammoniumhydroxide.

Geeignete Metalle sind die der ersten Haupt- und Nebengruppe, der zweiten Haupt- und Nebengruppe, der dritten Hauptgruppe, der vierten Haupt- und Nebengruppe, der fünften Hauptgruppe, der sechsten Nebengruppe und der siebten und achten Nebengruppen.

Bevorzugte Umesterungskatalysatoren sind Dibutylzinnoxid, Dibutylzinndilaurat, $SnO_2$, MgO, CaO, $Ca(OH)_2$, Tetrabutoxyorthotitanat, Zinkacetat, Diazabicycloundecen, Diazabicyclononen, DABCO, Imidazol, Tetramethylammoniumhydroxid, Natriumhydroxid, Kaliumhydroxyd, Benzimidazol, Ammoniak, Piperazin Bleiacetat, PbO, $Sb_2O_3$, Eisenacetylacetonat, Cobaltacetat und Triethylammoniumchlorid.

Die Umesterungskatalysatoren werden in Mengen von 0,01 Mol-% bis 1 Mol-%, bezogen auf molare, aromatische Carbonatstruktureinheit

$$(-O-R-O-\underset{\underset{O}{\|}}{C}-)$$

des zu verschäumenden Polycarbonats eingesetzt. Bevorzugte Molmengen an Umesterungskatalysatoren sind 0,04-0,1 Mol-%.

Der Rest -O-R-O- ist hierbei der Rest eines Diphenolats.

Geeignete aromatische Polycarbonsäuren sind insbesondere aromatische Tricarbonsäuren, vor allem solche, deren Carboxylgruppen nicht zur Ausbildung eines 5-Ring- oder 6-Ring-Dianhydrids befähigt sind.

Geeignete Polycarbonsäuren sind beispielsweise Trimesinsäure, Isophthalsäure, Terephthalsäure, 4,4'- oder 3,3'-Diphenyletherdicarbonsäure, 2,6-Naphthalindicarbonsäure, Trimellithsäure, 1,4,5,8-Naphthalintetracarbonsäure, 3,3',4,4'-Benzophenontetracarbonsäure, 2,2',4,4'-Diphenylsulfontetracarbonsäure, Phthalsäure und 2,2',4,4'-Diphenylethertetracarbonsäure, aber auch aromatische Hydroxypolycarbonsäuren wie 3- oder 4-Hydroxyphthalsäure, Hydroxyterephthalsäure und 2,5-Dihydroxyterephthalsäure. Bevorzugte Polycarbonsäure ist die Trimesinsäure.

Die aromatischen Polycarbonsäuren werden in Mengen von 0,1 Mol-% bis 5 Mol-%, vorzugsweise von 0,5 Mol-% bis 2 Mol-%, bezogen wieder auf molare aromatische Carbonatstruktureinheit

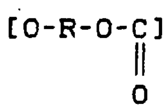

des zu verschäumenden Polycarbonats eingesetzt.

Geeignete Hydroxycarbonsäuren sind Zitronensäure und ihre Mono- oder Dialkylester, Glyoxylsäure, Milchsäure, ε-Hydroxycapronsäure, γ-Hydroxybuttersäure, Apfelsäure oder Weinsäure.

Sie werden zu Mengen von 0,1 Mol-% bis 5 Mol-%, vorzugsweise 0,2 Mol-% bis 1 Mol-%, bezogen wieder auf molare, aromatische Carbonatstruktureinheit

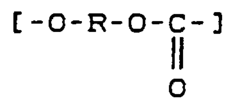

des zu verschäumenden Polycarbonats eingesetzt.

Geeignete aliphatische Alkohole sind aliphatische Di-, Tri-, Tetra-alkohole und aliphatische Alkohole mit mehr als 4 alkoholischen OH-Gruppen.

Geeignete aliphatische Alkohole sind beispielsweise Ethylenglykol, Butandiol, Propylenglykol, Aidpol, Glycerin, Trimethylolpropan, Neopentylglykol, Pentaerythrit, Mannit und Sorbit, sowie polymere Alkohole wie Polyethylenglykol, Polytetrahydrofuran und Polypropylenglykol mit vorzugsweise einem $\overline{M}n$ von kleiner 5000, wobei $\overline{M}n$ in bekannter Weise mittels Bestimmung der OH-Endgruppen ermittelt ist.

Bevorzugter Alkohol ist Pentaerythrit.

Die aliphatischen Alkohole werden in Mengen von 0,1 Mol-% bis 5 Mol-%, vorzugsweise in Mengen von 0,2 Mol-% bis 2 Mol-%, bezogen wieder auf molare, aromatische Carbonatstruktureinheiten

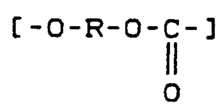

des zu verschäumenden Polycarbonats eingesetzt.

Die Wassermenge beträgt 0,1 Mol-% bis 5 Mol-%, vorzugsweise 0,2 Mol-% bis 2 Mol-%, bezogen auf Mole aromatische Carbonatstruktureinheiten

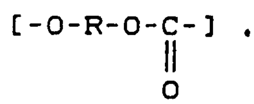

Die Einarbeitung der Umesterungskatalysatoren in Kombination mit den aromatischen Polycarbonsäuren und/oder mit $H_2O$, gegebenenfalls unter Mitverwendung von aliphatischen Hydroxycarbonsäuren und/oder aliphatischen Alkoholen, erfolgt bei Temperaturen von 220°C bis 320°C, vorzugsweise von 240°C.

Danach kann die jeweilige Mischung durch Spritzguß z.B. bei 260°C bis 340°C, oder deren Extrusion z.B. bei 210°C bis 270°C zu Schaumformkörpern verarbeitet werden, wobei Reaktionszeiten von 0,5 Min. bis 5 Min. eingehalten werden.

Die erfindungsgemäß erhaltenen Polycarbonat-Schaumformkörper zeichnen sich durch helle Eigenfarbe, gleichmäßige feine Schaumstruktur, und glatte Oberfläche aus.

Gegenstand der vorliegenden Erfindung ist somit auch ein Verfahren zur Herstellung von Polycarbonatschaumformkörpern, das dadurch gekennzeichnet ist, daß man thermoplastische Polycarbonate mit mittleren Gewichtsmittelmolekulargewichten $\overline{M}w$ von 5000 bis 50000, vorzugsweise von 15000 bis 35000, mit Umesterungskatalysatoren in Mengen von 0,01 Mol-% bis 1 Mol-%, in Kombination mit aromatischen Polycarbonsäuren in Mengen von 0,1 Mol-%

bis 5 Mol-% und/oder $H_2O$ in Mengen von 0,1 Mol-% bis 5 Mol-%, gegebenenfalls unter Mitverwendung von aliphatischen Hydroxycarbonsäuren und/oder von aliphatischen Alkoholen in Mengen von 0,1 Mol-% bis 5 Mol-% bezogen in allen Fällen auf Mole. aromatische Carbonatstruktureinheiten

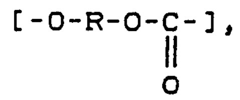

worin -O-R-O-, ein Diphenolat-Rest ist, vermischt und danach die erhaltene Mischung durch Spritzguß oder Extrusion bei Temperaturen von 210°C bis 340°C zu Schaumformkörpern verarbeitet, wobei Reaktionszeiten von 0,5 Minuten bis 5 Minuten, vorzugsweise von 1 Minute bis 2 Minuten eingehalten werden.

Gegenstand der vorliegenden Erfindung ist auch ein Verfahren zum Verschäumen von thermoplastischen, aromatischen Polycarbonaten, das dadurch gekennzeichnet ist, daß man thermoplastische aromatische Polycarbonate mit Umesterungskatalysatoren in Mengen von 0,01 Mol-% bis 1 Mol-%, in Kombination mit aromatischen Polycarbonsäuren in Mengen von 0,1 Mol-% bis 5 Mol-% und mit Diarylcarbonaten und/oder Oligocarbonaten in Mengen von 0,1 Mol-% bis 5 Mol-% bezogen in allen Fällen auf Mole, aromatische Carbonatstruktureinheiten

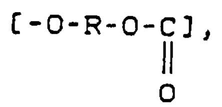

worin -O-R-O- ein Diphenolatrest ist, bei Temperaturen von 220°C bis 320°C vermischt und entweder bei Temperaturen von 220°C bis 320°C im Extruder ohne Anlegung von Vakuum zu geschäumten Formkörpern extrudiert oder bei Temperaturen von 190°C bis 330°C in Spritzgußmaschinen zu geschäumten Formkörpern spritzgießt.

Die nach diesem erfindungsgemäßen Verfahren erhältlichen Polycarbonatschäume haben sehr helle Eigenfarbe, gute Zähigkeit und eine hervorragende Zellstruktur. Der Grad der Verschäumung läßt sich durch Art und Menge der bei der Schaumherstellung üblichen Zusatzstoffe in weiten Bereichen steuern.

Aromatische Polycarbonate, Umesterungskatalysatoren und aromatische Polycarbonsäuren sind bereits erläutert. Geeignete Diaryl- und/oder Oligocarbonate entsprechen der Formel (I)

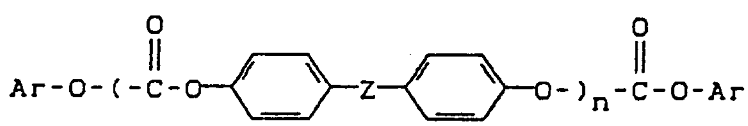

wobei

Ar für einen beliebigen $C_6$-$C_{14}$-Arylrest, vorzugsweise für einen Phenylrest,

Z für eine $C_1$-$C_{22}$-Alkylen- oder Alkylidengruppe, vorzugsweise für einen 2,2-Isopropylidenrest und

n für eine natürliche Zahl von 0 bis 20, vorzugsweise für 0 steht.

Besonders bevorzugt ist Diphenylcarbonat.

Dieses erfindungsgemäße Verschäumungsverfahren kann noch, wie bereits erwähnt, unter Zusatz von für die Schaumherstellung üblichen Additiven wie Verstärkungsstoffen, beispielsweise Glasfasern, und/oder Nucleierungsmitteln und/oder Flammschutzmitteln und/oder Entformungsmitteln und/oder Farbstoffen und/oder Pigmenten, beispielsweise Rutil oder Ruß, und/oder Stabilisatoren gegen Hitze, UV-Strahlung und Feuchtigkeit durchgeführt werden.

Eine Erweiterung dieses erfindungsgemäßen Verfahrens ist auch noch dadurch möglich, daß den zu verschäumenden Polycarbonaten noch andere Thermoplasten zugemischt sein können, vorzugsweise thermoplastische Polyalkylenterephthalate, ABS-Polymerisate, SAN-Polymerisate und Polyolefine in Mengen bis zu 100 Gew.-%, bezogen jeweils auf Gewicht Polycarbonat.

Das Verschäumungsverfahren wird durch die Anwesenheit dieser anderen Thermoplasten nicht blockiert.

Gegenstand der vorliegenden Erfindung ist somit auch das Verschäumen von thermoplastischen aromatischen Polycarbonaten im Gemisch mit maximal gleichen Gewichtsmengen an anderen Thermoplasten, das dadurch gekennzeichnet ist, daß man die thermoplastischen aromatischen Polycarbonate im Gemisch mit maximal gleichen Gewichtsmengen an anderen Thermoplasten anmeldungsgemäß verschäumt.

Auch hierbei können die bereits erwähnten üblichen Additive mit einbezogen werden.

Diesen erfindungsgemäß zu verschäumenden Polycarbonaten können noch die bekannten Schlagzähmodifikatoren wie beispielsweise hydrierte Butadien-Styrol-Copolymerisate oder Acrylatpfropfkautschuke in den üblichen Mengen, vorzugsweise in Mengen bis zu 10 Gew.-%, bezogen auf Gewicht Polycarbonat, zugesetzt sein.

Gegenstand der vorliegenden Erfindung ist somit außerdem das Verschäumen von thermoplastischen, aromatischen Polycarbonaten in all seinen bislang dargelegten Varianten, das dadurch gekennzeichnet ist, daß man den Polycarbonaten vor dem erfindungsgemäßen Verschäumen Schlagzähmodifikatoren in Mengen bis zu 10 Gew.-%, bezogen auf Gewicht Polycarbonat, zugesetzt hat.

Erfindungsgemäß mitzuverwendende thermoplastische Polyalkylenterephthalate sind beispielsweise solche auf Basis von Ethylenglykol, Propandiol-1,3, Butandiol-1,4, Hexandiol-1,6 und 1,4-Bis-hydroxymethylcyclohexan. Die Molekulargewichte (Mw) dieser Polyalkylenglycolterphthate liegen zwischen 10.000 und 80.000. Die Polyalkylenglykolterephthalate können nach bekannten Verfahren beispielsweise aus Terephthalsäuredialkylester und dem entsprechenden Diol durch Umesterung erhalten werden. Beispielsweise geht man von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140°C auf 210-220°C erhöht. Der in Freiheit gesetzte Alkohol wird aodestilliert. Die Aufkondensation erfolgt anschließend bei Temperaturen von 210-280°C, der Druck wird dabei stufenweise bis auf weniger als 1 Torr erniedrigt, wobei das überschüssige Diol abdestilliert wird.

Erfindungsgemäß mitzuverwendende thermoplastische ABS-Polymerisate sind solche, in denen auf einen Kautschuk entweder ein Monomer aus der Reihe Styrol, Methylmethacrylat oder eine Monomermischung von 95-50 Gew.-% Styrol, α-Methylstyrol, Methylmethacrylat oder Mischungen daraus und 5-50 Gew.-% Acrylnitril, Methylmethacrylat, Maleinsäureanhydrid, N-substituierte Maleinimide oder Mischungen daraus pfropfpolymerisiert sind. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylethers von Acryl- oder Methacrylsäure (z.B. Methylacrylat, Ethylacrylat, Methylmethacrylat und Ethylmethacrylat).

Die Pfropfmischpolymerisate enthalten 5-80 Gew.-%, insbesondere 20-70 Gew.-%, Kautschuk und 95-20 Gew.-%, insbesondere 80-30 Gew.-%, pfropfcopolymerisierte Monomere. Die Kautschuke liegen in diesen Pfropfmischpolymerisaten in Form wenigstens partiell vernetzter Teilchen einer mittleren Teilchengröße von 0,09 bis 5 μm, insbesondere von 0,1 bis 1 μm, vor. Derartige Pfropfmischpolymerisate werden durch radikalische Pfropfcopolymerisation von Monomeren aus der Reihe Styrol, α-Methylstyrol, Acrylnitril, Methylmethacrylat, Maleinsäureanhydrid in Gegenwart der zu pfropfenden Kautschuke hergestellt und sind durchweg bekannt. Bevorzugte Herstellungsverfahren für solche Pfropfmischpolymerisate sind die Emulsions-, Lösungs-, Masse- oder Suspensionspolymerisation.

Erfindungsgemäß mitzuverwendende thermoplastische SAN-Polymerisate sind Copolymerisate von 95-50 Gew.-Teilen Styrol, α-Methylstyrol, Methylmethacrylat oder Mischungen daraus und 5-50 Gew.-Teilen Acrylnitril, Methacrylnitril, Methylmethacrylat oder Mischungen daraus. Unter diesen Copolymerisaten sind besonders bevorzugt Produkte aus etwa 80-60 Gew.-% Styrol, und 20-40 Gew.-% Acrylnitril, sowie die analogen Copolymerisate aus α- Methylstyrol.

Erfindungsgemäß mitzuverwendende thermoplastische Polyolefine sind Polymere von aliphatischen ungesättigten Kohlenwasserstoffen, wie beispielsweise Ethylen, Propylen, Butylen oder Isobutylen, die nach üblichen Verfahren z.B. Radikalpolymerisation erhalten werden und mittlere Gewichtsmittel oder Molekulargewichte Mw (gemessen nach gelchromatographischen Methoden) zwischen 1000 und 3.000.000 haben. Es ist sowohl Hochdruckpolyolefin als auch Niederdruckpolyolefin brauchbar. Die ungesättigten Kohlenwasserstoffe können auch mit anderen Vinylmonomeren wie z.B. Vinylacetat in bekannter Weise copolymerisiert sein.

Die Polyolefine können auch durch kontrollierten oxidativen Abbau modifiziert sein (Polyethylenwachse).

Die Vorabmischung der einzelnen Komponenten also Polycarbonate, Umesterungskatalysatoren, Polysäuren und Di- oder Oligoarylcarbonate, übliche Additive, andere Thermoplasten und/oder Schlagzähmodifikatoren kann in bekannter Weise bei Raumtemperatur erfolgen.

Die erfindungsgemäße Verschäumung erfolgt dann auf den üblichen Maschinen.

Gegenstand der vorliegenden Erfindung ist auch ein Verfahren zum Verschäumen von thermoplastischen Polycarbonaten, das dadurch gekennzeichnet ist, daß man thermoplastische Polycarbonate mit mittleren Gewichtsmittelmolekulargewichten $\overline{M}w$ von 5000 bis 50000, vorzugsweise von 15000 bis 35000, mit Umesterungskatalysatoren in Mengen von 0,01 Mol-% bis 1 Mol-%, in Kombination mit aromatischen Polycarbonsäuren in Mengen von 0,1 Mol-% bis 5 Mol-% und in Kombination mit aliphatischen Hydroxycarbonsäuren und/oder aliphatischen Polyalkoholen in Mengen von 0,1 Mol-% bis 5 Mol-%, bezogen in allen Fällen auf molare, aromatische Carbonatstruktureinheiten

$$[-O-R-O-\underset{\underset{\displaystyle O}{\|}}{C}-],$$

worin -O-R-O-, ein Diphenolat-Rest ist, bei Temperaturen von 220°C bis 320°C vermischt und danach die erhaltene Mischung durch Spritzguß oder Extrusion bei Temperaturen von 220°C bis 320°C zu Schaumformkörpern verarbeitet, wobei Reaktionszeiten von 0,5 Minuten bis 5 Minuten, vorzugsweise von 1 Minute bis 2 Minuten eingehalten werden.

Auch die nach diesem erfindungsgemäßen Verfahren erhältlichen Polycarbonatschäume haben sehr helle Eigenfarbe, gute Zähigkeit und eine hervorragende Zellstruktur. Der Grad der Verschäumung läßt sich durch Art und Menge der bei der Schaumherstellung üblichen Zusatzstoffe in weiten Bereichen steuern.

Auch dieses erfindungsgemäße Verschäumungsverfahren kann noch wie bereits erwähnt, unter Zusatz von für die Schaumherstellung üblichen Additiven durchgeführt werden.

Eine Erweiterung dieses erfindungsgemäßen Verfahrens ist auch noch dadurch möglich, daß den zu verschäumenden Polycarbonaten noch andere Thermoplasten zugemischt sein können, vorzugsweise thermoplastische Polyalkylenterephthalate, ABS-Polymerisate, SAN-Polymerisate und Polyolefine in Mengen bis zu 100 Gew.-%, bezogen jeweils auf Gewicht Polycarbonat.

Das Verschäumungsverfahren wird durch die Anwesenheit dieser anderen Thermoplasten nicht blockiert.

Gegenstand der vorliegenden Erfindung ist somit auch das Verschäumen von thermoplastischen aromatischen Polycarbonaten im Gemisch mit maximal gleichen Gewichtsmengen an anderen Thermoplasten, das dadurch gekennzeichnet ist, daß man die thermoplastischen aromatischen Polycarbonate im Gemisch mit maximal gleichen Gewichtsmengen an anderen Thermoplasten anmeldungsgemäß verschäumt.

Auch hierbei können die bereits erwähnten üblichen Additive mit einbezogen werden.

Dies erfindungsgemäß zu verschäumenden Polycarbonaten können auch noch die bekannten Schlagzähmodifikatoren wie beispielsweise hydrierte Butadien-Styrol-Copolymerisate oder Acrylatpfropfkautschuke in den üblichen Mengen, vorzugsweise in Mengen bis zu 10 Gew.-%, bezogen auf Gewicht Polycarbonat, zugesetzt sein.

Gegenstand der vorliegenden Erfindung ist somit außerdem das Verschäumen von thermoplastischen, aromatischen Polycarbonaten in all seinen bislang dargelegten Varianten, das dadurch gekennzeichnet ist, daß man den Polycarbonaten von dem erfindungsgmeäßen Verschäumen Schlagzähmodifikatoren in Mengen bis zu 10 Gew.-%, bezogen auf Gewicht Polycarbonat, zugesetzt hat.

Die Vorabmischung der einzelnen Komponenten also Polycarbonate, übliche Additive, andere Thermoplasten und/oder Schlagzähmodifikatoren kann wieder in bekannter Weise bei Raumtemperatur erfolgen.

Die erfindungsgemäße Verschäumung erfolgt dann wieder auf den üblichen Maschinen.

Die erfindungsgemäß erhältlichen Schaumstoffe können zu beliebigen Formkörpern ausgeformt oder nach der Verschäumung zurechtgeschnitten werden.

Die erfindungsgemäß erhältlichen Schaumstoff-Formkörper können vorteilhaft als Formteile zur Herstellung großflächiger Abdeckungen von Lampen, Gehäusen, Bürogeräten oder zur Herstellung großflächiger Schrankelemente, eingesetzt werden.

<u>Beispiele A</u>

(Zusatz von Umesterungskatalysator und aromatischer Polycarbonsäure)

<u>Beispiel 1</u>

Man extrudiert die Mischung hergestellt aus 87,45 % verzweigtes Bisphenol A-Polycarbonat, 10 % einer Mischung aus Polycarbonat mit 30 % Kurzglasfaser (E-Glas), 2 % einer Pigment-Mischung 07/394 aus $TiO_2$ und Ruß, 0,5 % Trimesinsäure und 0,05 % Dibutylzinnoxid bei 240/250/190°C in einem Dreizonen- Einschneckenextruder. Die Extrusion erfolgt auf einem Dreizonen-Einschneckenextruder mit konstanter Gangsteigerung von 1 D, Schneckendurchmesser D=37 mm, Schneckenlänge L=25 D, Gangtiefenverhältnis (Ausstoßzone/Einzugszone) 1:2,5. Die Temperaturen der Zonen betrugen 240°C, 250°C und 190°C. Die Verschäumung wurde ohne Kalibrierung nach dem Verfahren der freien Aufschäumung durchgeführt. Man erhält einen Schaum der Dichte 0,8 $g/cm^3$ mit geschlossenzelliger, feinporiger Struktur.

<u>Beispiel 2</u>

Man extrudiert die Mischung, hergestellt aus 87,45 % verzweigtes Bisphenol A-Polycarbonat, 10 % einer Mischung

aus Polycarbonat mit 30 % Kurzglasfaser, 2 % einer Pigmentmischung aus $TiO_2$ und Ruß, 0,5 % Trimesinsäure und 0,05 % Magnesiumstearat bei 240/250/190°C in einem Dreizonen-Einschneckenextruder. Man verfährt wie in Beispiel 1 beschrieben und erhält einen Schaum der Dichte 0,4 g/$cm^3$.

Beispiel 3

Man extrudiert die Mischung, hergestellt aus 87,45 % verzweigtes Bisphenol A-Polycarbonat, 10 % einer Mischung aus Polycarbonat mit 30 % Kurzglasfaser (E-Glas), 2 % einer Pigmentmischung aus $TiO_2$ und Ruß, 0,5 % Trimesinsäure und 0,05 % Trimesinsäurediammoniumsalz, bei 240/250/ 190°C in einem Dreizonen-Einschneckenextruder. Man verfährt wie in Beispiel 1 beschrieben und erhält einen Schaum der Dichte 0,5 g/$cm^3$.

Beispiel 4

Man extrudiert die Mischung, hergestellt aus 87,45 % verzweigtes Bisphenol A-Polycarbonat, 10 % einer Mischung aus Polycarbonat mit 30 % Kurzglasfaser (E-Glas), 2 % einer Pigment-mischung 07/394 aus $TiO_2$ und Ruß, 0,5 % Trimesinsäure und 0,05 % Piperazin bei 240/250/190°C in einem Dreizonen- Einschneckenextruder. Man verfährt wie in Beispiel 1 beschrieben und erhält einen Schaum der Dichte 0,5 g/$cm^3$.

Beispiele B

(Zusatz von Umesterungskatalysator und $H_2O$)

Beispiel 5

Man extrudiert die Mischung 89,5 % Bisphenol-A-Polycarbonat, 10 % eines Polycarbonats mit 30 % Kurzglasfaser (E-Glas), 0,49 % Wasser und 0,01 % Calciumoxid.

Die Extrusion erfolgt auf einem Dreizonen-Einschneckenextruder mit konstanter Gangsteigerung von 1 D, Schneckendurchmesser D=37 mm, Schneckenlänge L=25 D, Gangstufenverhältnis (Ausstoßzone/Einzugszone) 1:2,5. Die Temperaturen der Zonen betrugen 240°C, 250°C und 190°C. Die Verschäumung wurde ohne Kalibrierung nach dem Verfahren der freien Aufschäumung durchgeführt. Man erhielt einen geschlossenzelligen Schaum der Dichte 0,6 g/$cm^3$.

Beispiel C

(Zusatz von Umesterungskatalysator, aromatische Polycarbonsäure und $H_2O$)

Beispiel 6

Man extrudiert die Mischung aus 87,35 % verzweigtem Bisphenol-A-Polycarbonat, 10 % einer Mischung aus Poly carbonat mit 30 % Kurzglasfaser (E- Glas), 2 % einer Pigmentmischung aus Ruß und $TiO_2$, 0,05 % Dibutylzinnoxid, 0,5 % Trimesinsäure und 0,1 % Wasser. Man verfährt wie in Beispiel 1 beschrieben und erhält einen Schaum der Dichte 0,5 g/$cm^3$.

Beispiel D

(Zusatz von Umesterungskatalysator, $H_2O$ und aliphatische Hydroxycarbonsäuren)

Beispiel 7

Man extrudiert die Mischung aus 87,5 % verzweigtes Bisphenol A-Polycarbonat, 10 % einer Mischung aus Polycarbonat mit 30 % Kurzglasfaser (E-Glas), 2 % einer Pigmentmischung 07/394 aus $TiO_2$ und Ruß, 0,5 % Trimesinsäure, 0,4 % Wasser, 0,01 % Calciumoxid und 0,09 % Citronensäurebutylester der Fa. Boeringer-Ingelheim. Die Extrusion erfolgt wie in Beispiel 5. Man erhält einen Schaum der Dichte 0,5 g/$cm^3$.

Beispiel E

(Zusatz von Umesterungskatalysator, $H_2O$ und aliphatischem Alkohol)

Beispiel 8

Man extrudiert die Mischung aus 87 % verzweigtem Bisphenol-A-Polycarbonat, 10 % einer Mischung aus Makrolon mit 30 % Kurzglasfaser (E-Glas), 2 % einer Pigmentmischung aus $TiO_2$ und Ruß, 0,5 % Pentaerythrit, 0,4 % Wasser und 0,1 % Dibutylzinnoxid und verfährt wie in Beispiel 1 beschrieben. Man erhält einen Schaum der Dichte 0,5 g/cm$^3$.

Beispiele F

(Die verwendeten Polycarbonate wurden nicht getrocknet)

Beispiel 9

Man extrudiert die Mischung aus 87,20 % verzweigtes Polycarbonat der relativen Lösungsviskosität 1,3, 10 % einer Mischung aus Polycarbonat mit 30 % Kurzglasfaser (E-Glas), 2 % Pigment 07/394 (Mischung aus $TiO_2$ und Ruß), 0,5 % Trimesinsäure, 0,25 % Diphenylcarbonat und 0,05 % Dibutylzinnoxid. Die Extrusion erfolgt auf einem Dreizonen-Einschneckenextruder mit konstanter Gangsteigung von 1 D, Schneckendurchmesser D = 37 mm, Schneckenlänge L = 25 D, Gangstufenverhältnis (Ausstoßzone/Einzugszone) 1:2,5. Die Temperaturen der Zonen betrugen 240°C, 250°C und 190°C. Die Verschäumung wurde ohne Kalibrierung nach dem Verfahren der freien Aufschäumung durchgeführt. Man erhält einen feinporigen, geschlossenzelligen Schaum der Dichte 0,5 g/cm$^3$. Die relative Lösungsviskosität betrug 1,29.

Beispiel 10

Man ertrudiert die Mischung aus 86,95 % verzweigtes Polycarbonat der relativen Lösungsviskosität 1,31, 10 % einer Mischung aus Polycarbonat mit 30 % Kurzglasfaser, 2 % Pigment 07/394, 0,5 % Trimesinsäure, 0,5 % Diphenylcarbonat und 0,05 % Dibutylzinnoxid. Man verfährt wie in Beispiel 9 beschrieben und erhält einen feinporigen, geschlossenzelligen Schaum der Dichte 0,5 g/cm$^3$. Die relative Lösungsviskosität betrug 1,30.

Beispiel 11

Man extrudiert die Mischung aus 98,9 % Polycarbonat der relativen Lösungsviskosität 1,28, 1 % Trimesinsäure, 1 % Diphenylcarbonat und 0,1 % Natriumtetraphenylcarbonat. Man verfährt wie in Beispiel 9 beschrieben. Man erhält einen feinporigen, geschlossenzelligen Schaum der Dichte 0,5 g/cm$^3$. Die relative Lösungsviskosität betrug 1,28.

Beispiele G

Beispiel 12

Man extrudiert die Mischung aus 87,45 % Bisphenol-A-Polycarbonat, 10 % bromhaltigem Polycarbonat mit 30 % Kurzglasfaser, E-Glas, 2 % Pigment 07/394 (Mischung aus $TiO_2$ und Ruß) und 0,4 % Trimesinsäure, 0,1 % Pentaerythrit und 0,05 % Dibutylzinnoxid. Die Extrusion erfolgt auf einem Dreizonen-Einschneckenextruder mit konstanter Gangsteigung von 1 D, Scheckendurchmesser D=37 mm, Schneckenlänge L=25 D, Gangstufenverhältnis (Ausstoßzone/Einzugszone) 1:2,5. Die Temperaturen der Zonen betrugen 240°C, 250°C und 190°C. Die Verschäumung wurde ohne Kalibrierung nach dem Verfahren der freien Aufschäumung durchgeführt. Man erhielt einen feinporigen, geschlossenzelligen Schaum der Dichte 0,5 g/cm$^3$.

Beispiel 13

Man extrudiert die Mischung aus 87,45 % Bisphenol-A-Polycarbonat, bromhaltigem Polycarbonat mit 30 % Kurzglasfaser, 2 % Pigment 97/394, 0,4 % Isophthalsäure, 0,1 % Pentaerythrit und 0,05 % Dibutylzinnoxid. Man verfährt wie in Beispiel 12 beschrieben und erhält einen feinporigen geschlossenzelligen Schaum der Dichte 0,5 g/cm$^3$.

**Patentansprüche**

1. Verfahren zur Herstellung von Polycarbonatschaumformkörpern, dadurch gekennzeichnet, daß man thermoplastische Polycarbonate mit mittleren Gewichtsmittelmolekulargewichten $\overline{M}w$ von 5000 bis 50000 mit Umesterungskatalysatoren in Mengen von 0,01 Mol-% bis 1 Mol-%, in Kombination mit

a) aromatischen Polycarbonsäuren in Mengen von 0,1 Mol-% bis 5 Mol-%, und oder

b) $H_2O$ in Mengen von 0,1 Mol-% bis 5 Mol-%, sowie gegebenenfalls aliphatischen Hydroxycarbonsäuren und/oder aliphatischen Alkoholen in Mengen von 0,1 Mol-% bis 5 Mol-%,
oder in Kombination mit

c) aromatischen Polycarbonsäuren in Mengen von 0,1 Mol-% bis 5 Mol-% und Diarylcarbonaten und/oder Oligocarbonaten in Mengen von 0,1 Mol-% bis 5 Mol-%, bezogen in allen Fällen auf Mole, aromatische Carbonatstruktureinheiten

$$[-O-R-O-\underset{\underset{O}{\|}}{C}],$$

worin -O-R-O- ein Diphenylatrest ist,
vermischt und danach die erhaltene Mischung durch Spritzguß oder Extrusion zu Schaumformkörpern verarbeitet.

2. Verfahren gemäß Anspruch 1, dadurch gekennzeichnet, daß ein oder mehrere weitere Additive einbezogen werden.

3. Verwendung von thermoplastischen Polycarbonaten als Treibmittel zum Verschäumen von thermoplastischen Polycarbonaten.

4. Verfahren zur Herstellung von Polycarbonatschaumformkörpern, dadurch gekennzeichnet, daß man thermoplastische Polycarbonate mit mittleren Gewichtsmittelmolekulargewichten $\overline{M}w$ von 5000 bis 50000 mit Umesterungskatalysatoren in Mengen von 0,01 Mol-% bis 1 Mol-%, in Kombination mit aromatischen Polycarbonsäuren in Mengen von 0,1 Mol-% bis 5 Mol-% und/oder $H_2O$ in Mengen von 0,1 Mol-% bis 5 Mol-%, gegebenenfalls unter Mitverwendung von aliphatischen Hydroxycarbonsäuren und/oder von aliphatischen Alkoholen in Mengen von 0,1 Mol-% bis 5 Mol-% bezogen in allen Fällen auf Mole, aromatische Carbonatstruktureinheiten

$$[-O-R-O-\underset{\underset{O}{\|}}{C}] ,$$

worin -O-R-O- ein Diphenolatrest ist,
vermischt und danach die erhaltene Mischung durch Spritzguß oder Extrusion bei Temperaturen von 210°C bis 340°C zu Schaumformkörpern verarbeitet, wobei Reaktionszeiten von 0,5 Minuten bis 5 Minuten eingehalten werden.

5. Verfahren zum Verschäumen von thermoplatischen, aromatischen Polycarbonaten, dadurch gekennzeichnet, daß man thermoplastische aromatische Polycarbonate mit Umesterungskatalysatoren in Mengen von 0,01 Mol-% bis 1 Mol-% in Kombination mit aromatischen Polycarbonsäuren in Mengen von 0,1 Mol-% bis 5 Mol-% und Diarylcarbonaten und/oder Oligocarbonaten in Mengen von 0,1 Mol-% bis 5 Mol-% bezogen in allen Fällen auf Mole, aromatische Carbonatstruktureinheiten

$$[-O-R-O-\underset{\underset{O}{\|}}{C}],$$

worin -O-R-O- ein Diphenolatrest ist, bei Temperaturen von 220°C bis 320°C vermischt und entweder bei Temperaturen von 220°C bis 320°C im Extruder ohne Anlegung von Vakuum zu geschäumten Formkörpern extrudiert

oder bei Temperaturen von 190°C bis 320°C in Spritzgußmaschinen zu geschäumten Formkörpern spritzgießt.

6. Verfahren gemäß Anspruch 5, dadurch gekennzeichnet, daß man die thermoplastischen Polycarbonate im Gemisch mit maximal gleichen Gewichtsmengen an anderen Thermoplasten verschäumt.

7. Verfahren gemäß Ansprüche 5, und 6, dadurch gekennzeichnet, daß man den Polycarbonaten vor dem Verschäumen Schlagzähmodifikatoren in Mengen bis zu 10 Gew.-%, bezogen auf Gewicht Polycarbonat, zugesetzt hat.

8. Verfahren zum Verschäumen von thermoplastischen, aromatischen Polycarbonaten, dadurch gekennzeichnet, daß man thermoplastische Polycarbonate mit mittleren Gewichtsmittelmolekulargewichten $\overline{M}w$ von 5000 bis 50000 mit Umesterungskatalysatoren in Mengen von 0,01 Mol-% bis 1 Mol-%, in Kombination mit aromatischen Polycarbonsäuren in Mengen von 0,1 Mol-% bis 5 Mol-% und in Kombination mit aliphatischen Hydroxycarbonsäuren und/oder aliphatischen Polyalkoholen in Mengen von 0,1 Mol-% bis 5 Mol-%, bezogen in allen Fällen auf molare, aromatische Carbonatstruktureinheiten

$$[-O-R-O-\underset{\underset{O}{\|}}{C}-],$$

worin -O-R-O-, ein Diphenolat-Rest ist, bei Temperaturen von 220°C bis 320°C vermischt und danach die erhaltene Mischung durch Spritzguß oder Extrusion bei Temperaturen von 220°C bis 320°C zu Schaumformkörpern verarbeitet, wobei Reaktionszeiten von 0,5 Minuten bis 5 Minuten eingehalten wurden.

9. Verfahren gemäß Anspruch 8, dadurch gekennzeichnet, daß man die thermoplastischen Polycarbonate im Gemisch mit maximalen gleichen Gewichtsmengen an anderen Thermoplasten verschäumt.

10. Verfahren gemäß Ansprüche 8, und 9, dadurch gekennzeichnet, daß man den Polycarbonaten vor dem Verschäumen Schlagzähmodifikatoren in Mengen bis zu 10 Gew.-%, bezogen auf Gewicht Polycarbonat, zugesetzt hat.

## Claims

1. A process for the production of polycarbonate foam mouldings, characterised in that thermoplastic polycarbonates having average weight average molecular weights $\overline{M}_w$ of from 5,000 to 50,000 are mixed with transesterification catalysts in quantities of from 0.01 mol-% to 1 mol-%, in combination with

   a) aromatic polycarboxylic acids in quantities of from 0.1 mol-% to 5 mol-%, and/or

   b) $H_2O$ in quantities of from 0.1 mol-% to 5 mol-% and optionally aliphatic hydroxycarboxylic acids and/or aliphatic alcohols in quantities of from 0.1 mol-% to 5 mol-%,
   or in combination with

   c) aromatic polycarboxylic acids in quantities of from 0.1 mol-% to 5 mol-% and diaryl carbonates and/or oligocarbonates in quantities of from 0.1 mol-% to 5 mol-%, referred in all cases to mols aromatic carbonate structural units

$$[O-R-O-\underset{\underset{O}{\|}}{C}],$$

   wherein -O-R-O- is a diphenylate group,
   and the mixture obtained is then processed into foam mouldings by injection moulding or extrusion.

2. The process according to claim 1, characterised in that one or more other additives are included.

3. The use of thermoplastic polycarbonates as blowing agents for the foaming of thermoplastic polycarbonates.

4. A process for the production of polycarbonate foam mouldings, characterised in that thermoplastic polycarbonates having average weight average molecular weights $\overline{M}_w$ of from 5,000 to 50,000 are mixed with transesterification catalysts in quantities of from 0.01 mol-% to 1 mol-%, in combination with aromatic polycarboxylic acids in quantities of from 0.1 mol-% to 5 mol-% and/or $H_2O$ in quantities of from 0.1 mol-% to 5 mol-%, optionally with concomitant use of aliphatic hydroxycarboxylic acids and/or of aliphatic alcohols in quantities of from 0.1 mol-% to 5 mol-%, referred in all cases to mols aromatic carbonate structural units

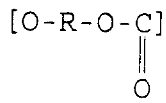 ,

wherein -O-R-O- is a diphenylate group, and the mixture obtained is then processed into foam mouldings by injection moulding or extrusion at temperatures of from 210°C to 340°C, with reaction times of from 0.5 minutes to 5 minutes being maintained.

5. A process for the foaming of thermoplastic aromatic polycarbonates, characterised in that thermoplastic aromatic polycarbonates are mixed with transesterification catalysts in quantities of from 0.01 mol-% to 1 mol-% in combination with aromatic polycarboxylic acids in quantities of from 0.1 mol-% to 5 mol-% and diaryl carbonates and/or oligocarbonates in quantities of from 0.1 mol-% to 5 mol-%, referred in all cases to mols aromatic carbonate structural units

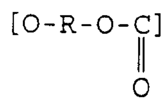 ,

wherein -O-R-O- is a diphenylate group, at temperatures of from 220°C to 320°C and are either extruded in an extruder without application of a vacuum at temperatures of from 220°C to 320°C to form foam mouldings or are injection-moulded in injection moulding machines at temperatures of from 190°C to 320°C to form foam mouldings.

6. The process according to claim 5, characterised in that the thermoplastic polycarbonates are foamed in mixtures containing at most equal quantities by weight of other thermoplastics.

7. The process according to claims 5 and 6, characterised in that, prior to the foaming, agents for modifying the impact resistance have been added to the polycarbonates, in quantities of up to 10 wt.%, referred to the weight of the polycarbonate.

8. A process for the foaming of thermoplastic aromatic polycarbonates, characterised in that thermoplastic polycarbonates having average weight average molecular weights $\overline{M}_w$ of from 5,000 to 50,000 are mixed with transesterification catalysts in quantities of from 0.01 mol-% to 1 mol-%, in combination with aromatic polycarboxylic acids in quantities of from 0.1 mol-% to 5 mol-% and in combination with aliphatic hydroxycarboxylic acids and/or aliphatic polyalcohols in quantities of from 0.1 mol-% to 5 mol-%, referred in all cases to molar, aromatic carbonate structural units

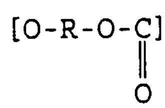 ,

wherein -O-R-O- is a diphenylate group, at temperatures of from 220°C to 320°C, and the mixture obtained is then processed into foam mouldings by injection moulding or extrusion at temperatures of from 220°C to 320°C, with reaction times of from 0.5 minutes to 5 minutes being maintained.

9. The process according to claim 8, characterised in that the thermoplastic polycarbonates are foamed in mixtures containing at most equal quantities by weight of other thermoplastics.

10. The process according to claims 8 and 9, characterised in that, prior to the foaming, agents for modifying the impact resistance have been added to the polycarbonates, in quantities of up to 10 wt.%, referred to the weight of the polycarbonate.

## Revendications

1. Procédé de fabrication de corps façonnés de mousse de polycarbonate, caractérisé par le fait qu'on mélange des polycarbonates thermoplastiques, ayant des masses moléculaires moyennes en poids $\overline{Mw}$ de 5000 à 50 000, avec des catalyseurs de transestérification dans des quantités de 0,01% en moles à 1% en moles, en combinaison avec :

    (a) des acides polycarboxyliques aromatiques dans des quantités de 0,1% en moles à 5% en moles, et/ou

    (b) $H_2O$ dans des quantités de 0,1% en moles à 5% en moles, ainsi que, le cas échéant, des acides hydroxycarboxyliques aliphatiques et/ou des alcools aliphatiques dans des quantités de 0,1% en moles à 5% en moles,

    ou en combinaison avec

    (c) des acides polycarboxyliques aromatiques dans des quantités de 0,1% en moles à 5% en moles et des carbonates de diaryle et/ou des oligocarbonates dans des quantités de 0,1% à 5% en moles, par rapport, dans tous les cas, à une quantité molaire d'unités structurales de carbonate aromatique

    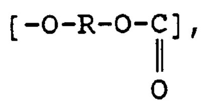

    où -O-R-O est un reste diphénolate,

    puis qu'on transforme le mélange obtenu, par moulage par injection ou par extrusion, en corps façonnés de mousse.

2. Procédé selon la revendication 1, caractérisé par le fait qu'un ou plusieurs autres additifs sont inclus.

3. Utilisation de polycarbonates thermoplastiques comme agent moussant pour le moussage de polycarbonates thermoplastiques.

4. Procédé de fabrication de corps façonnés de mousse de polycarbonate, caractérisé par le fait qu'on mélange des polycarbonates thermoplastiques, ayant des masses moléculaires moyennes en poids $\overline{Mw}$ de 5000 à 50 000, avec des catalyseurs de transestérification dans des quantités de 0,01% en moles à 1% en moles, en combinaison avec des acides polycarboxyliques aromatiques dans des quantités de 0,1% en moles à 5% en moles et/ou $H_2O$ dans des quantités de 0,1% en moles à 5% en moles, le cas échéant avec co-utilisation d'acides hydroxycarboxyliques aliphatiques et/ou d'alcools aliphatiques dans des quantités de 0,1% en moles à 5% en moles, par rapport, dans tous les cas, à la quantité molaire d'unités structurales de carbonate aromatique

    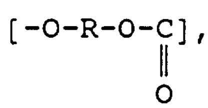

    où -O-R-O- est un reste diphénolate, puis qu'on transforme le mélange obtenu, par moulage par injection ou par extrusion, à des températures de 210°C à 340°C, en corps façonnés de mousse, des temps de réaction de 0,5 minute à 5 minutes étant observés.

5. Procédé pour le moussage de polycarbonates aromatiques thermoplastiques, caractérisé par le fait qu'on mélange des polycarbonates aromatiques thermoplastiques avec des catalyseurs de transestérification dans des quantités de 0,01% en moles à 1% en moles en combinaison avec des acides polycarboxyliques aromatiques dans des quantités de 0,1% en moles à 5% en moles et des carbonates de diaryle et/ou des oligocarbonates dans des quantités de 0,1% en moles à 5% en moles, par rapport, dans tous les cas, à la quantité molaire d'unités structurales

de carbonate aromatique

$$[-O-R-O-\underset{\underset{O}{\|}}{C}],$$

ou -O-R-O- est un reste diphénolate, à des températures de 220 à 320°C, et ou bien on extrude en corps façonnés moussés, à des températures de 220°C à 320°C, en extrudeuses, sans application de vide, ou bien on moule par injection en corps façonnés moussés à des températures de 190°C à 320°C en machines de moulage par injection.

**6.** Procédé selon la revendication 5, caractérisé par le fait qu'on réalise le moussage des polycarbonates thermoplastiques en mélange avec des quantités pondérales au maximum identiques en d'autres matières thermoplastiques.

**7.** Procédé selon l'une des revendications 5 et 6, caractérisé par le fait qu'on a ajouté aux polycarbonates, avant le moussage, des agents modificateurs destinés à conférer une résistance aux chocs, dans des quantités allant jusqu'à 10% en poids, par rapport au poids du polycarbonate.

**8.** Procédé pour le moussage de polycarbonates aromatiques thermoplastiques, caractérisé par le fait qu'on mélange des polycarbonates thermoplastiques, ayant des masses moléculaires moyennes en poids $\overline{Mw}$ De 5000 à 50 000, avec des catalyseurs de transestérification dans des quantités de 0,01% en moles à 1% en moles, en combinaison avec des acides polycarboxyliques aromatiques dans des quantités de 0,1% en moles à 5% en moles et en combinaison avec des acides hydroxycarboxyliques aliphatiques et/ou des polyols aliphatiques dans des quantités de 0,1% en moles à 5% en moles, par rapport, dans tous les cas, à la quantité molaire d'unités structurales de carbonate aromatique, molaires

$$[-O-R-O-\underset{\underset{O}{\|}}{C}],$$

où -O-R-O- est un reste diphénolate, à des températures de 220 à 320°C, puis qu'on transforme le mélange obtenu par moulage par injection ou par extrusion à des températures de 220°C à 320°C en corps façonnés de mousse, des temps de réaction de 0,5 minute à 5 minutes étant observés.

**9.** Procédé selon la revendication 8, caractérisé par le fait qu'on conduit le moussage des polycarbonates thermoplastiques en mélange avec des quantités pondérales au maximum identiques en d'autres matières thermoplastiques.

**10.** Procédé selon l'une des revendications 8 et 9, caractérisé par le fait qu'on a ajouté aux polycarbonates, avant le moussage, des agents modificateurs destinés à conférer une résistance aux chocs dans des quantités allant jusqu'à 10% en poids, par rapport au poids du polycarbonate.